# EUROPÄISCHE PATENTSCHRIFT

(11) **EP 0 982 201 B1**
(45) Veröffentlichungstag und Bekanntmachung des Hinweises auf die Patenterteilung: **26.10.2005**
(21) Anmeldenummer: 99114463.5
(22) Anmeldetag: 23.07.1999
(51) Int. Cl.: B60R 25/04, B60R 25/00, G07C 9/00

(54) **Fahrzeugsicherungssystem**
Vehicle security system
Systéme de sécurité pour véhicules

(30) Priorität: 28.08.1998 DE 19839348
(43) Veröffentlichungstag der Anmeldung: 01.03.2000
(73) Patentinhaber: DaimlerChrysler AG, 70567 Stuttgart (DE)
(72) Erfinder: Daiss, Michael, 70794 Filderstadt (DE); Geber, Michael, 72574 Bad Urach (DE); Ohle, Jörn-Marten, 71229 Leonberg (DE)

(56) Entgegenhaltungen:
- EP-A- 0 787 875
- EP-A- 0 937 844
- GB-A- 2 305 216
- GB-A- 2 305 285
- GB-A- 2 306 573
- US-A- 5 172 094

## Beschreibung

Die Erfindung bezieht sich auf ein Fahrzeugsicherungssystem nach dem Oberbegriff des Anspruchs 1.

Ein solches Fahrzeugsicherungssystem ist aus der GB 23 06 573 A bekannt, bei dem mit einem in ein Lenkschloss einsteckbaren elektronischen Schlüssel ein induktiver Schlüssel-Lenkschloss-Kommunikationskanal zur Authentikation realisiert wird, um bei festgestellter Nutzungsberechtigung eine Wegfahrsperreinrichtung zu deaktivieren und das Fahrzeug in Betrieb gesetzt werden kann. Zur Durchführung der Authentikation beinhaltet dieser elektronische Schlüssel einen Transponder, in welchem ein Nutzungsberechtigungscode gespeichert ist, der auslesbar ist, falls dieser elektronische Schlüssel im Lenkschloss eingesteckt ist. Ferner wird mit diesem elektronischen Schlüssel ein Schlüssel-Fahrzeug-Kommunikationskanal realisiert, in dem schlüsselseitig eine Sendereinheit und fahrzeugseitig eine Empfangseinheit sowie eine zugehörige Infrarot- oder Funk-Datenübertragungsstrecke vorgesehen ist. Die in dem elektronischen Schlüssel untergebrachte Sendereinheit kann mittels einer Bedientaste aktiviert werden, so dass hierdurch ein Steuerbefehl an die Empfangseinheit zur Ansteuerung von Zugangsschutzeinrichtungen in Form einer Zentralverriegelungsanlage oder einer Einbruchdiebstahlwarnanlage sendbar ist. Zusätzlich kann die Wegfahrsperrfunktion außer über den induktiven Schlüssel-Lenkschloss-Kommunikationskanal auch über die genannte Infrarot- oder Funk-Datenübertragungsstrecke angesteuert werden.

Derartige Sicherungssysteme sind beispielsweise in Automobilen üblich, um den Zugang und/oder die Benutzung des Fahrzeugs nur dem oder den dafür berechtigten Fahrzeugnutzern zu erlauben. Die Authentikationselemente dienen diesen autorisierten Fahrzeugnutzern dazu, gewünschte Steuerungsmaßnahmen der Zugangskontrolleinrichtung oder der elektronischen Wegfahrsperreinrichtung über einen jeweiligen drahtlosen Ansteuerkommunikationskanal anzufordern und sich hierzu als berechtigt auszuweisen, d.h. die Ansteuerung des jeweiligen fahrzeugseitigen Steuerteils der Zugangskontrolleinrichtung bzw. der elektronischen Wegfahrsperre erfolgt authentikationsbehaftet.

Als Authentikationselemente für solche drahtlosen Ansteuerkommunikationskanäle sind zum einen elektronische Schlüssel in Anlehnung an Systeme mit mechanischen Schlüsseln gebräuchlich, siehe z.B. die Patentschrift DE 195 31 219 C1. Unter dem Begriff "elektronischer Schlüssel" sollen dabei vorliegend solche drahtlos kommunizierenden Authentikationselemente verstanden werden, bei denen zur Durchführung der Authentikation eine Handhabung des Authentikationselementes selbst erforderlich ist, beispielsweise indem ein jeweiliger Authentikationskommunikationsvorgang durch Betätigen einer am elektronischen Schlüssel angeordneten Taste oder dergleichen oder durch Einstecken des Schlüssels in eine fahrzeugseitige Schlüsselaufnahme ausgelöst wird.

Um keine derartige Schlüsselhandhabung mehr zu benötigen, wird in jüngerer Zeit anstelle der Systeme mit elektronischen Schlüsseln und den zugehörigen schlüsselbehafteten drahtlosen Ansteuerkommunikationskanälen vermehrt die Verwendung sogenannter "Keyless-Go"-Systeme mit zugehörigen schlüsselfreien Ansteuerkommunikationskanälen vorgeschlagen. Unter Keyless-Go-Systeme sind dabei solche Sicherungssysteme zu verstehen, bei denen das Authentikationselement selbst keiner besonderen Handhabung zur Durchführung der Authentikationskommunikationsvorgänge bedarf. Als Authentikationselemente für solche Systeme sind vor allem Chipkarten und Transponder in Gebrauch, welche die Fahrzeugnutzer nur bei sich tragen brauchen, siehe die Zeitschriftenveröffentlichung B. Priemer, Kleines Wunder - Vorstellung Mercedes S-Klasse, auto motor sport, 15/1998, S. 16. Zur Anforderung einer gewünschten Steuerungsmaßnahme eines Keyless-Go-Systems durch den Benutzer sind verschiedene Vorgehensweisen bekannt. So gibt es Systeme, bei denen die jeweilige Authentikationskommunikation ohne jede weitere Handlung seitens des Benutzers automatisch dann ausgelöst wird, wenn der Benutzer mit seinem mitgeführten Authentikationselement in den Wirkbereich des betreffenden Ansteuerkommunikationskanals eintritt, d.h. in den Bereich, in welchem Kommunikationsvorgänge zwischen dem Authentikationselement und dem fahrzeugseitigen Sicherungssteuerteil wirksam durchgeführt werden können. Alternativ dazu sind Systeme bekannt, bei denen ein Authentikationskommunikationsvorgang über ein fahrzeugseitig angeordnetes Bedienelement oder über Spracheingabe benutzerangefordert erfolgt, siehe die Patentschriften DE 40 27 491 C2 und DE 44 14 734 C2.

Der Erfindung liegt als technisches Problem die Bereitstellung eines Fahrzeugsicherungssystems der eingangs genannten Art zugrunde, das einen hohen Bedienkomfort ermöglicht und für das eine hohe Akzeptanz zu erwarten ist.

Die Erfindung löst dieses Problem durch die Bereitstellung eines Fahrzeugsicherungssystems mit den Merkmalen des Anspruchs 1. Bei diesem System ist ein Keyless-Go-System in vorteilhafter Weise mit einem auf elektronischen Schlüsseln basierenden System kombiniert, wobei beide Teilsysteme parallel vorgesehen sind, so daß der Benutzer jedes System zum in Betrieb setzen des Fahrzeugs verwenden und dabei das Sicherungssystem wahlweise über den schlüsselbehafteten Kommunikationskanal des mit elektronischen Schlüsseln arbeitenden Teilsystems oder über den schlüsselfreien Kommunikationskanal des Keyless-Go-Teilsystems ansteuern kann. Durch die Möglichkeit, das Sicherungssystem mit elektronischen Schlüsseln ansteuern zu können, ist eine hohe Akzeptanz zu erwarten, da solche Systeme bereits weit verbreitet sind. Andererseits bietet das vorliegende System dem Benutzer die Möglichkeit, vom erhöhten Bedienkomfort eines Keyless-Go-Systems Gebrauch zu machen.

Durch die spezielle Kombination beider Teilsysteme, die dem schlüsselbehafteten Ansteuerkommunikationskanal grundsätzlich Vorrang gegenüber dem schlüsselfreien Ansteuerkommunikationskanal einräumt, braucht der Fahrzeugnutzer selbst nicht weiter auf eine etwaige Umschaltung zwischen beiden Teilsystemen zu achten. Vielmehr akzeptiert das Sicherungssystem im Betrieb zu jedem Zeitpunkt grundsätzlich sowohl die über den einen wie auch die über den anderen Ansteuerkommunikationskanal ausgelösten Ansteuerbefehle und verarbeitet diese nach dem erwähnten Vorrangprinzip. Dies bedeutet, daß den über einen elektronischen Schlüssel abgegebenen Ansteuerbefehlen normalerweise sofort oder jedenfalls geeignet verzögert gefolgt wird, d.h. soweit es die jeweils momentane Fahrzeugsituation zuläßt, während ein über den schlüsselfreien Kommunikationskanal eingehender Ansteuerbefehl nur beachtet wird, wenn kein damit kollidierender Ansteuerbefehl vom schlüsselbehafteten Teilsystem vorliegt.

Ein nach Anspruch 2 weitergebildetes System sieht eine günstige Art der Priorisierung für die von der zugehörigen Zugangskontrolleinrichtung durchgeführte Fahrzeugverriegelungsfunktion vor. Die gewählte Priorisierung gewährleistet, daß ein an elektronische Schlüssel gewöhnter Benutzer beim Verlassen des Fahrzeugs selbiges in für ihn gewohnter Weise über seinen elektronischen Schlüssel verriegeln kann und das System dieser Aufforderung unabhängig davon folgt, ob über das Keyless-Go-Teilsystem ein eventuell gegenteiliger Entriegelungsbefehl vorliegt. Dies ist insbesondere dann nützlich, wenn für das Keyless-Go-Teilsystem ein solches verwendet wird, das entsprechende Ver- oder Entriegelungsbefehle selbsttätig auslöst, wenn sich ein zugehöriges, gültiges Authentikationselement im Wirkbereich des betreffenden schlüsselfreien Ansteuerkommunikationskanals befindet.

Bei einem nach Anspruch 3 weitergebildeten System beinhaltet die elektronische Wegfahrsperreinrichtung in konventioneller Weise eine fahrzeugseitige Schlüsselaufnahme, in die zur Ansteuerung der Wegfahrsperre vom Benutzer ein gültiger elektronischer Schlüssel einzubringen ist, wonach dann meist selbsttätig ein Authentikationskommunikationsvorgang abläuft, der im Erfolgsfall zur Entschärfung der Wegfahrsperre führt. In Weiterbildung dieser Einrichtung ist nun vorgesehen, daß der schlüsselfreie Ansteuerkommunikationskanal deaktiviert gehalten wird, solange sich ein als gültig erkannter elektronischer Schlüssel in der Schlüsselaufnahme befindet. Dadurch kann ein an elektronische Schlüssel gewöhnter Benutzer, wenn er dies will, das Fahrzeug wie gewohnt mit seinem Schlüssel betreiben, ohne von Eingriffen des Keyless-Go-Teilsystems beeinflußt zu werden. Andererseits kann er vom hohen Bedienkomfort des Keyless-Go-Teilsystems Gebrauch machen, indem er keinen elektronischen Schlüssel in die Schlüsselaufnahme einbringt, jedoch das Authentikationselement des Keyless-Go-Teilsystems bei sich trägt.

Ein nach Anspruch 4 weitergebildetes Sicherungssystem bietet eine vorteilhafte Übergangsmaßnahme vom Keyless-Go-Teilsystem zum schlüsselbehafteten Teilsystem im laufenden Fahrbetrieb, indem dann, wenn vom Benutzer ein gültiger elektronischer Schlüssel bei laufendem Fahrzeugmotor in die Schlüsselaufnahme eingebracht wird, und dort speziell in eine Zündung-Aus-Position, der Motor erst abgeschaltet wird, wenn das Fahrzeug steht.

Ein nach Anspruch 5 weitergebildetes System bietet dadurch einen hohen Nutzungskomfort, daß jeweils ein elektronischer Schlüssel und ein handhabungsfreies Authentikationselement für das Keyless-Go-Teilsystem in ein gemeinsames, kombiniertes Authentikationselement integriert sind. Jeder autorisierte Systemnutzer braucht dann nur ein einziges Authentikationselement mit sich zu führen, das er sowohl als elektronischen Schlüssel wie auch als handhabungsfreies Keyless-Go-Authentikationselement einsetzen kann.

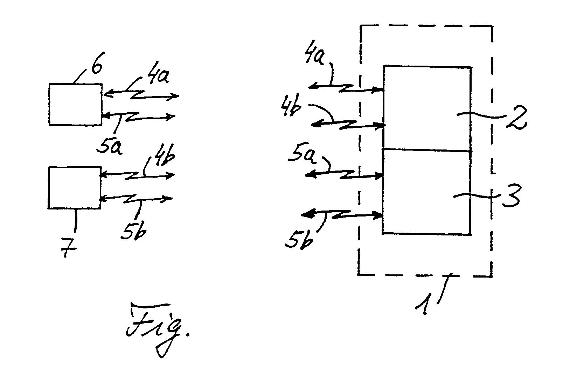

Eine vorteilhafte Ausführungsform der Erfindung ist in der Zeichnung dargestellt und wird nachfolgend beschrieben.

Die einzige Figur zeigt ein schematisches Blockdiagramm eines Fahrzeugsicherungssystems mit Zugangskontrolleinrichtung und elektronischer Wegfahrsperre.

Das in der Figur nur schematisch dargestellte Fahrzeugsicherungssystem weist ein erstes Teilsystem in Form einer Zugangskontrolleinrichtung und ein zweites Teilsystem in Form einer elektronischen Wegfahrsperreinrichtung auf, deren Komponenten, soweit nachfolgend nicht näher darauf eingegangen wird, von einem herkömmlichen Aufbau und in herkömmlicher Weise miteinander verschaltet sind. So weist der im Fahrzeug 1 untergebrachte, fahrzeugseitige Teil 2 der Zugangskontrolleinrichtung insbesondere eine Zugangssteuereinheit und von dieser ansteuerbare Schließeinheiten für die Fahrzeugtüren und einen Heckdeckel auf, während der fahrzeugseitige Teil 3 der elektronischen Wegfahrsperre eine Wegfahrsperrensteuereinheit beinhaltet, die fahrbetriebsnotwendige Komponenten ansteuert, z.B. mittels Schaltelementen zum Ein- und Ausschalten der Zündung und zum Anlassen des Motors. Die beiden fahrzeugseitigen Steuerteile 2, 3 können als getrennte Einheiten realisiert oder in einem einzigen Steuergerät integriert sein.

Charakteristischerweise sind sowohl für die Zugangssteuereinheit 2 wie auch für die Wegfahrsperrensteuereinheit 3 je zwei drahtlose Ansteuerkommunikationskanäle 4a, 4b, 5a, 5b zur authentikationsbehafteten Ansteuerung wahlweise über einen elektronischen Schlüssel 6 oder eine Chipkarte 7 vorgesehen, wobei statt der Chipkarte 7 alternativ ein anderes herkömmliches, handhabungsfreies Authentikationselement vorgesehen sein kann. Es versteht sich, daß im allgemeinen mehrere elektronische Schlüssel 6 und Chipkarten 7 für mehrere autorisierte Fahrzeugnutzer vorhanden sind. Somit kann ein berechtigter Nutzer wahlweise die Zugangskontrolleinrichtung über einen elektronischen Schlüssel 6 und den zugehörigen schlüsselbehafteten Zugangskontroll-Ansteuerkommunikationskanal 4a oder über eine Chipkarte 7 und den zugehörigen schlüsselfreien Zugangskontroll-Ansteuerkommunikationskanal 4b und wahlweise die elektronische Wegfahrsperre über einen elektronischen Schlüssel 6 und den zugehörigen schlüsselbehafteten Wegfahrsperren-Ansteuerkommunikationskanal 5a oder über eine Chipkarte 7 und den zugehörigen schlüsselfreien Wegfahrsperren-Ansteuerkommunikationskanal 5b ansteuern.

Während beim gezeigten System der oder die elektronischen Schlüssel 6 einerseits und die eine oder mehrere Chipkarten 7 andererseits als getrennte Einheiten gezeigt sind, ist es alternativ möglich, je einen elektronischen Schlüssel 6 und eine Chipkarte 7 zu einem gemeinsamen Authentikationselement zu vereinigen, indem beispielsweise die Chipkarte 7 in das Gehäuse des elektronischen Schlüssels 6 integriert ist. In diesem Fall braucht jeder Fahrzeugnutzer nur ein einziges, kombiniertes Authentikationselement bei sich zu tragen.

Die Abgabe eines jeweiligen Ansteuerbefehls über den elektronischen Schlüssel 6 erfolgt vom Benutzer durch entsprechende Handhabung des elektronischen Schlüssels 6 in herkömmlicher Weise dadurch, daß die Zugangskontrolleinrichtung durch Betätigen einer Bedientaste am Schlüssel 6 und die elektronische Wegfahrsperre durch Einstecken und Ausstecken des Schlüssels 6 in bzw. aus einem elektronischen Zündschloß angesteuert wird. Analog erfolgt auch die Systemansteuerung über die Chipkarte 7 nach einem herkömmlichen Prinzip, beispielsweise durch selbsttätige Abgabe eines jeweiligen Steuerbefehls immer dann, wenn die Chipkarte 7 in den Wirkbereich eines ihrer beiden Kommunikationskanäle 4b, 5b gelangt. Diese Wirkbereiche können z.B. durch den Fangbereich einer fahrzeugseitig angeordneten Antennenvorrichtung definiert sein. Für den Zugangs-Ansteuerkommunikationskanal 4b erstreckt sich dieser Wirkbereich zweckmäßigerweise mindestens über eine fahrzeugaußenseitige Zugangszone, in die der Fahrzeugnutzer zwangsläufig beim Herannähern an das Fahrzeug zwecks Betreten desselben eintritt. Der Wirkbereich des Wegfahrsperren-Ansteuerkommunikationskanals 5b der Chipkarte 7 erstreckt sich mindestens im Fahrzeuginnenraum über den Bereich hinweg, in welchem Fahrzeuginsassen Platz nehmen oder die mitgeführte Chipkarte 7 ablegen können.

Alternativ kann vorgesehen sein, den jeweiligen Authentikationskommunikationsvorgang nicht schon selbsttätig mit Eintritt der Chipkarte 7 in den betreffenden Kommunikationskanal-Wirkbereich, sondern erst auf Benutzeranforderung hin auszulösen, wozu dann fahrzeugseitig entsprechende Betätigungselemente vorgesehen sind, wie ein Entriegelungs- und Verriegelungs-Betätigungselement an der Außenseite einer oder mehrerer Fahrzeugtüren zur Zugangskontrollsteuerung und/oder ein innenraumseitiges Betätigungselement zur Wegfahrsperrenansteuerung.

Zur Verhinderung von Befehlskollisionen durch das Vorhandensein der beiden parallelen Ansteuerkommunikationskanäle für die Zugangskontrolleinrichtung bzw. die elektronische Wegfahrsperre ist im gezeigten Sicherungssystem eine Priorisierung des jeweiligen schlüsselbehafteten Ansteuerkommunikationskanals 4a, 5a gegenüber dem jeweiligen schlüsselfreien Ansteuerkommunikationskanal 4b, 5b implementiert. Dies bedeutet, daß normalerweise, d.h. soweit es die jeweilige Fahrzeugsituation erlaubt, den Ansteuerbefehlen über den elektronischen Schlüssel 6 Vorrang gegenüber den Ansteuerbefehlen über die Chipkarte 7 gegeben ist. Ein Benutzer, der an den Umgang mit dem elektronischen Schlüssel 6 gewöhnt ist, kann dadurch das Sicherungssystem auf die für ihn gewohnte Weise benutzen, ohne vom Keyless-Go-Teilsystem mit der Chipkarte 7 gestört zu werden. Andererseits kann ein Benutzer, der vom hohen Bedienkomfort des Keyless-Go-Teilsystems profitieren will, dies in einfacher Weise dadurch erreichen, daß er keinen Gebrauch vom elektronischen Schlüssel 6 macht. Irgendwelche Umschaltungsmaßnahmen zwischen den beiden Teilsystemen braucht der Fahrzeugnutzer hierfür nicht vorzunehmen. Die Priorisierung der schlüsselbehafteten Ansteuerkommunikationskanäle 4a, 5a ist in einer dem Fachmann geläufigen Weise im fahrzeugseitigen Systemteil 2, 3 implementiert und umfaßt insbesondere die beiden folgenden Maßnahmen.

Für das Verriegeln des Fahrzeugs, d.h. das Steuern der Schließeinheiten durch den Zugangssteuerteil in ihren verriegelten Zustand, ist vorgesehen, daß ein außen am Fahrzeug stehender Benutzer den entsprechenden Verriegelungsbefehl durch Betätigen seines elektronischen Schlüssels 6, z.B. durch Drücken einer dortigen Verriegelungstaste, auslösen kann und dies dann auch tatsächlich zur gewünschten Fahrzeugverriegelung unabhängig davon führt, ob sich gleichzeitig eine gültige Chipkarte 7 im Wirkbereich von deren Zugangs-Ansteuerkommunikationskanal 4b befindet und daher möglicherweise einen gegenteiligen Entriegelungsbefehl abgibt. Ein solcher Chipkarten-Entriegelungsbefehl wird ignoriert, wenn der Verriegelungsbefehl von einem gültigen elektronischen Schlüssel 6 abgegeben wird.

Für die Wegfahrsperrenansteuerung ist als Priorisierungsmaßnahme vorgesehen, daß das Keyless-Go-Teilsystem diesbezüglich deaktiviert gehalten wird, solange ein gültiger elektronischer Schlüssel im elektronischen Zündschloß steckt. Wie üblich, entspricht dabei das bloße Eingestecktsein des elektronischen Schlüssels im Zündschloß einer Zündung-aus-Schlüsselposition, in welcher die Fahrberechtigungsprüfung durchgeführt wird, Zündung und Motor jedoch noch abgeschaltet sind. Von dieser Position kann der Schlüssel in eine Zündung-ein-Position gebracht werden, womit die Zündung eingeschaltet wird. Beim Weiterdrehen in eine Anlasser-ein-Position wird der Motor gestartet, wonach der Schlüssel in die Zündung-ein-Position zurückkehrt. In dem Fall, daß das Fahrzeug über das Keyless-Go-Teilsystem in Betrieb gesetzt wurde und dann bei laufendem Motor ein gültiger elektronischer Schlüssel in das Zündschloß gesteckt wird, d.h. sich dort in der Zündung-aus-Position befindet, ist als weitergehende Priorisierungsmaßnahme die Übergangsmaßnahme vorgesehen, daß das Keyless-Go-Teilsystem deaktiviert gehalten wird, solange sich der Schlüssel im Zündschloß befindet, jedoch das durch die Zündung-aus-Position des Schlüssels angeforderte Abschalten des Motors erst dann durchgeführt wird, wenn das Fahrzeug steht. Letzteres kann vom System beispielsweise dann angenommen werden, wenn sich ein Automatgetriebe-Wählhebel in der Parkstellung befindet. Anschließend kann der Fahrzeugnutzer das Fahrzeug entweder über den schlüsselbehafteten Ansteuerkommunikationskanal wieder in Betrieb setzen, indem er den Schlüssel im Zündschloß entsprechend betätigt, oder über das Keyless-Go-Teilsystem, indem er den Schlüssel aus dem Zündschloß abzieht und ggf. noch ein Auslöse-Bedienelement des Keyless-Go-Teilsystems betätigt, um einen Authentikationsvorgang auszulösen.

## Patentansprüche

1. Fahrzeugsicherungssystem mit
- einer Zugangskontrolleinrichtung mit einem fahrzeugseitigen Zugangssteuerteil (2) und/oder einer elektronischen Wegfahrsperreinrichtung mit einem fahrzeugseitigen Wegfahrsperrensteuerteil (3) und
- benutzerseitig mitführbaren Authentikationselementen (6, 7) zur authentikationsbehafteten Ansteuerung des oder der fahrzeugseitigen Steuerteile (2, 3) über einen zugehörigen drahtlosen Ansteuerkommunikationskanal (4a, 5a; 4b, 5b),
- wobei sowohl ein schlüsselbehafteter Ansteuerkommunikationskanal (4a, 5a) mit einem oder mehreren elektronischen Schlüsseln als handhabungsbehaftete Authentikationselemente wie auch ein schlüsselfreier drahtloser Ansteuerkommunikationskanal (4b, 5b) mit einem oder mehreren handhabungsfreien Authentikationselementen (7) jeweils zum in Betrieb setzen des Fahrzeugs und zur Ansteuerung des jeweiligen fahrzeugseitigen Steuerteils (2, 3) wahlweise über den einen oder den anderen Ansteuerkommunikationskanal vorgesehen sind und
- dem jeweiligen schlüsselbehafteten Ansteuerkommunikationskanal (4a, 5a) Vorrang gegenüber dem entsprechenden schlüsselfreien Ansteuerkommunikationskanal (4b, 5b) gegeben ist,
- wobei die elektronische Wegfahrsperreinrichtung (3) eine fahrzeugseitige Schlüsselaufnahme aufweist, eine Authentikationskommunikation mit einem dort eingebrachten elektronischen Schlüssel (6) durchführt und bei erkanntem gültigem Schlüssel die Fahrberechtigung freigibt und
- der schlüsselfreie Wegfahrsperren-Ansteuerkommunikationskanal (5b) deaktiviert gehalten wird, solange sich ein als gültig erkannter Schlüssel (6) in der Schlüsselaufnahme befindet
- wobei die Schlüsselaufnahme eine Zündung-aus-Schlüsselposition und eine Zündung-ein-Schlüsselposition aufweist,
**dadurch gekennzeichnet,**
**dass**
- die elektronische Wegfahrsperreinrichtung im Fall, dass ein gültiger Schlüssel bei angeschaltetem Fahrzeugmotor in die Schlüsselaufnahme in Zündung-aus-Position eingebracht wird, den Fahrzeugmotor abschaltet, sobald ein Automatgetriebe - Wählhebel sich in der Parkstellung befindet und angenommen wird, dass das Fahrzeug steht.

2. Fahrzeugsicherungssystem nach Anspruch 1, **dadurch**
**gekennzeichnet,**
**dass** der fahrzeugseitige Zugangssteuerteil (2) zugehörige Schließeinheiten bei Empfang eines Verriegelungsbefehls über einen jeweiligen elektronischen Schlüssel (6) auch dann in ihren verriegelten Zustand steuert, wenn der schlüsselfreie Verriegelungs-Ansteuerkommunikationskanal (4b) einen entriegelten Schließzustand angibt.

3. Fahrzeugsicherungssystem nach Anspruch 1 oder 2, **dadurch**
**gekennzeichnet,**
**dass** je ein elektronischer Schlüssel (6) und ein handhabungsfreies Authentikationselement (7) in ein gemeinsames, kombiniertes Authentikationselement integriert sind.

## Claims

1. Vehicle security system comprising
- an access monitoring device with a vehicle-side access control part (2) and/or an electronic immobilising device with a vehicle-side immobilising control part (3) and
- authentication elements (6, 7) which can be carried on the user side for actuation, subject to authentication, of the vehicle-side control part(s) (2, 3) via an associated wireless actuation communication channel (4a, 5a; 4b, 5b),
- wherein an actuation communication channel (4a, 5a) requiring a key, with one or more electronic keys as authentication elements requiring handling, and also a key-free wireless actuation communication channel (4b, 5b) with one or more handling-free authentication elements (7) are provided, in each case, to start up the vehicle and to actuate the respective vehicle-side control part (2, 3) via one or the other actuation communication channel selectively and
- the respective actuation communication channel (4a, 5a) requiring a key is given priority over the corresponding key-free actuation communication channel (4b, 5b),
- wherein the electronic immobilising device (3) has a vehide-side key receiver, carries out an authentication communication with an electronic key (6) introduced therein and enables driving authorisation when a valid key is recognised and
- the key-free immobilisation actuation communication channel (5b) is kept deactivated as long as a key (6) recognised as valid is located in the key receiver,
- wherein the key receiver has an ignition-off key position and an ignition-on key position, **characterised in that**
- if a valid key is introduced into the key receiver in the ignition-off position with the vehicle engine switched on, the electronic immobilising device switches the vehicle engine off, as soon as an automatic transmission selection lever is in the parking position and it is assumed that the vehicle is stationary.

2. Vehicle security system according to claim 1, **characterised in that** the vehicle-side access control part (2) directs associated locking units into their locked state on receipt of a locking command via a respective electronic key (6) even when the key-free locking actuation communication channel (4b) indicates an unlocked locking state.

3. Vehicle security system according to claim 1 or 2, **characterised in that** an electronic key (6) and a handling-free authentication element (7), respectively, are integrated into a common, combined authentication element.

## Revendications

1. Système de sécurité pour véhicules, comprenant :
- un dispositif de contrôle d'accès, avec une partie de commande d'accès (2), située côté véhicule, et/ou un dispositif électronique d'empêchement de commencement de roulage comportant une partie de commande d'empêchement de roulage (3), située côté véhicule, et
- des éléments d'authentification (6,7) pouvant être emportés côté utilisateur, pour assurer la commande, affectée d'une authentification, de la ou des parties de commande (2,3) situées côté véhicule, par l'intermédiaire d'un canal de communication de commande (4a,5a ; 4b, 5b) sans fil, afférent,
- où, tant un canal de communication de commande (4a, 5a) affecté d'une clé, comprenant une ou plusieurs clés électroniques en tant qu'éléments d'authentification affectés d'une manipulation, qu'également un canal de communication de commande (4b,5b) sans fil, sans clé, comprenant un ou plusieurs éléments d'authentification (7), exempt(s) de manipulation, chaque fois pour obtenir la mise en service du véhicule et pour commander la partie de commande (2,3) côté véhicule respective, sont prévus au choix, par l'intermédiaire de l'un ou de l'autre canal de communication de commande, et
- au canal de communication de commande (4a,5a), affecté d'une clé, respectif, étant accordée la priorité par rapport au canal de communication de commande (4b,5b) sans clé, correspondant,
- où le dispositif électronique d'empêchement de commencement de roulage (3) présente un réceptacle pour clé côté véhicule, effectue une communication d'authentification avec une clé (6) électronique y étant introduite et, lorsque la clé valide est identifiée, déclenche l'autorisation de roulage, et
- le canal de communication de commande de blocage de commencement de roulage (5b) sans clé étant maintenu désactivé, aussi longtemps qu'une clé (6), identifiée comme valide, se trouve dans le réceptable pour clé,
- où le réceptacle pour clé présente pour la clé une position d'allumage coupé et une position d'allumage en service, **caractérisé**
**en ce que**
- le dispositif électronique de blocage de commencement de roulage, dans le cas où une clé valide est introduite dans le réceptacle pour clé, en position d'allumage coupé, alors que le moteur du véhicule est en service, met hors service le moteur du véhicule, dès qu'un levier de sélection de transmission automatique se trouve à la position de stationnement et en supposant que le véhicule soit stationnaire.

2. Système de sécurité pour véhicule selon la revendication 1, **caractérisé en ce que** la partie de commande d'accès (2) située côté véhicule commande des unités de fermeture afférentes en cas de réception d'un ordre de verrouillage par l'intermédiaire d'une clé électronique (6) respective, également à son état verrouillé lorsque le canal de communication de commande de verrouillage (4b) sans clé indique un état de fermeture déverrouillé.

3. Système de sécurité pour véhicule selon la revendication 1 ou 2, **caractérisé en ce qu'**une clé électronique (6) et un élément d'authentification (7) sans manipulation sont intégrés dans un élément d'authentification combiné, commun.
